# EUROPEAN PATENT SPECIFICATION

(11) **EP 3 527 756 B1**
(45) Date of publication and mention of the grant of the patent: **25.11.2020**
(21) Application number: 19158058.8
(22) Date of filing: 19.02.2019
(51) Int. Cl.: E05B 19/20, B23C 1/20, B23C 3/35

(54) **MACHINE FOR OBTAINING AN ENCRYPTED KEY**
MASCHINE ZUR ERZEUGUNG EINES VERSCHLÜSSELTEN SCHLÜSSELS
MACHINE POUR OBTENIR UNE CLÉ CRYPTÉE

(30) Priority: 20.02.2018 IT 201800002873
(43) Date of publication of application: 21.08.2019
(73) Proprietor: SILCA S.p.A., 31029 Vittorio Veneto (IT)
(72) Inventor: DI LEO, Vito Michele, 31029 VITTORIO VENETO (TREVISO) (IT)
(74) Representative: Piovesana, Paolo

(56) References cited:
- US-A- 1 948 260
- US-A- 2 763 027
- US-A- 3 919 920
- US-A- 4 132 151
- US-A- 4 817 406
- US-A1- 2007 105 484

## Description

The present invention relates to a machine of the kind defined in the preamble of claim 1 for obtaining an encrypted key starting from the corresponding lock intended to be opened by said key, i.e. without having the original key available, and a method which uses said machine.

Currently, to make a copy of a key it is necessary to have the corresponding original key available or it is necessary to know the code that uniquely identifies a certain cipher. Therefore, if the only original key is lost or is no longer available or if this code is not known, it is rather complicated, and it is sometimes impossible, to make a copy of it.

US 3'919'920 A discloses an example of a machine according to the preamble of claim 1. In particular it describes a machine for copying a key comprising a unit, on which a cutter and a feeler are mounted, and at least one mold on which to place the rod of the key to be cutter ed.

The object of the present invention is to propose a machine and a method that allow to obtain a duplicate of a key without having to start from or have available the original key.

Another object of the invention is to propose a machine and a method that can be used to obtain copies of punched or flat keys.

Another object of the invention is to propose a machine and a method that is alternative and/or improved respect to traditional ones.

Another object of the invention is to propose a machine and a method with an alternative characterization, both in functional and implementation terms, with respect to or traditional ones.

Another object of the invention is to provide a machine that can be fabricated easily, quickly and with low costs.

Another object of the invention is to propose a machine which is compact and easily transportable.

Another object of the invention is to propose a method that can be implemented in a simple, rapid and with low costs.

All these and other objects which will result from the following description are achieved, according to the invention, with the machine having the characteristics indicated in claim 1, with the set having the characteristics indicated in claim 7 and with the method having the characteristics indicated in claim 10. Preferred optional embodiments are presented in the dependent claims.

In particular, the improved machine according to the invention for processing a of key and, preferably for machining aimed at defining the encryption of said key, and comprises:
- a unit on which a milling cutter and a feeler are mounted, side by side and joined together, said unit being movable with respect to a portion, which is facing said cutter and said feeler, or vice versa,
- at least a first operative seat and at least a second operative seat, respectively facing said cutter ing cutter and said feeler, and formed in said portion and/or in said unit,
- at least a first jig module which is configured to receive at least the stem of said key to be machined, is removably inserted, at least in part, into said first operative seat and is sliding inside it so that said cutter is facing, and may so work in sequence, on different areas of said stem of said key,
- at least a second jig module which is configured so as to comprise portions of different depths, is removably inserted, at least in part, into said second operative seat and is sliding inside it so that said feeler is facing, and can enter into contact with its tip, with one of said portions.

Advantageously, said portions of different depths comprise a series of blind holes, the bottom of which has different depths.

Advantageously, said first jig module comprises a longitudinal groove with a width configured in order to allow the insertion and stable housing of the stem of a key.

Advantageously, said first jig module comprises a longitudinal groove of such depth that, when the stem of the key to be machined is inserted into said groove, the visible surface of said key is essentially coplanar with the adjacent non-grooved portions of the module itself.

Preferably, said first operative seat comprises a cavity which is defined in said portion and is closed at the top by a base provided with an opening facing said cutter ing cutter and communicating with said first operative seat, said first jig module and said upper base being configured in such a way as to cooperate to clamp the stem of said key to be machined when it is inserted in said first jig module.

Advantageously, said first jig module has a series of recesses which cooperate with a projection provided on a wall of said first seat, or vice versa, to allow the sliding step by step of the first jig module in its seat. Advantageously, said second jig module has a series of recesses which cooperate with a projection provided on a wall of said second seat, or vice versa, to allow the sliding of the second jig module inside its seat.

Preferably, said first jig module has at least one set of marks to facilitate the unambiguous identification of the position of the first module inside the first operative seat. Preferably, said second jig module has at least one set of marks to facilitate the unambiguous identification of the position of the second module inside the second operative seat.

In particular, the set of elements for the processing of a key according to the invention, and preferably for the processing aimed at defining the encryption of said key, comprises a machine with one or more of the characteristics described above.

Advantageously, said set also includes a plurality of first jig modules, each of which is shaped to be removably insertable and slidable within said first operative seat obtained in said portion and/or in said unit. Advantageously, said set also comprises a plurality of second jig modules, each of which is shaped to be removably insertable and slidable inside said second operative seat obtained in said portion and/or in said unit.

Preferably, each first jig module of the set comprises a longitudinal groove which is interposed between two non-grooved side portions and which has a width suitable for allowing the insertion and stable housing of the stem of a key,
Preferably, said first jig of the set modules have not grooved portions of different widths so to modify, in a transverse sense, the area of the stem of the key to face said cutter.

Advantageously, said set includes an openable container, preferably shaped like a case, which, inside, is provided a seat for housing said machine and at least a seat for housing at least a first jig module and at least one according to the jig module.

Preferably, said housing seat is configured to house said machine when the respective operative seats are empty.

In particular, the method according to the invention, in order to obtain a key capable of opening a lock having available and starting from said lock, envisages using a machine according to one or more of the characteristics described above.

Advantageously, the raw starting key to be worked with the machine described above comprises at least one outer and superficial layer made of malleable material. Preferably, said raw starting key comprises an inner core of rigid material and an external and superficial layer of malleable material. Preferably, said raw starting key with an external/superficial layer made of malleable material is obtained by a further thermal treatment of a traditional raw key which is entirely made of brass.

Advantageously, the method according to the invention comprises the following steps:
- the raw key to be machined, which has an outer/superficial layer of malleable material is inserted in a lock to be opened/unlocked and an attempt is made to rotate said key inside the latter, thus stimulating at least one opening attempt,
- the key is extracted from the lock and the signs which the pistons of the lock have left on the surface of the outer layer of malleable material of said key following said opening attempt, are identified thereon,
- on the basis of the signs that the lock pistons have left on the surface of the outer layer of malleable material of said key following said opening attempt, at least one first jig module and at least one second jig to be used are identified,
- the second jig module, so identified, is positioned inside its operative seat provided in the machine so that a portion of a given depth is brought in correspondence with the area of action of the feeler of said machine,
- the key is positioned in the first jig module, thus identified, and subsequently the first jig module is moved inside its operative seat so that each area of the stem of a key presenting a sign is brought in correspondence with the area of action of the cutter, and for each sign present in the stem of a key, a corresponding machining operation is carried out by means of the cutter so as to obtain in correspondence with said sign a groove of depth corresponding to that of the portion of the second jig which is facing/aligned to the feeler and which interacts with the latter.

Preferably, said passages are repeated cyclically several times until a key is obtained which, once inserted and rotated inside the lock, can open/unlock it and furthermore:
- in each cycle, the second jig module is positioned inside its operative seat provided in the machine so that, in correspondence with the area of action of the feeler of said machine, there is a portion of depth different from that which was facing the previous cycle, and
- in each cycle the new marks, which were not present in the previous cycles, are identified on the surface of the outer layer of malleable material of the key being worked, and are left on said surface following the last attempt to open the lock.

Preferably, said passages are cyclically repeated several times until a key is obtained which, once inserted and rotated inside the lock, is able to open/unlock it and furthermore:
- at least one further first jig is identified which has non-grooved portions of different widths compared to that of the first jig module already used, and
- the key is positioned in said further first jig module and in sequence it is moved within its operative seat so that each area of the stem of a key which has a sign is brought in correspondence with the area of action of the cutter.

The present invention is hereinafter further clarified in a preferred embodiment thereof, given purely by way of non-limiting example with reference to the attached tables of drawings, in which:

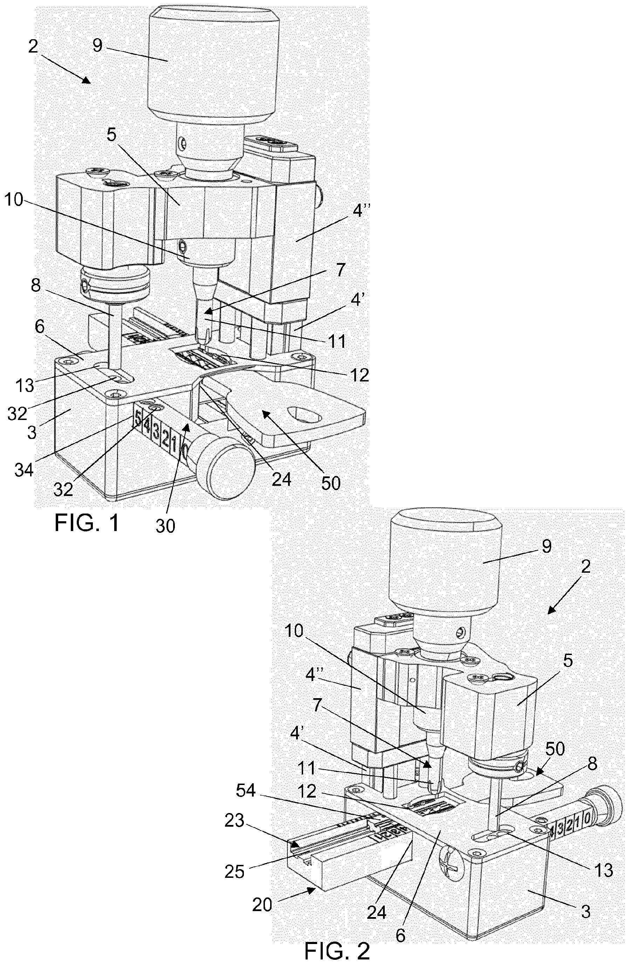

- Figure 1: shows in a first perspective view the machine according to the invention,
- Figure 2: shows it in a second perspective view,
- Figure 3: shows it in perspective view without the two jig modules, the
- Figure 4: shows in perspective view from above the first jig module,
- Figure 5: shows the jig module of fig. 4 in perspective view from below,
- Figure 6: shows in a perspective view from above the jig module of fig. 4 with the key,
- Figure 7: shows in perspective view from above the second jig module,
- Figure 8: shows in perspective view from below the jig module of fig. 7
- Figures 9-13: show schematically a detail of a key inserted inside a lock during the sequence of passages provided in the method according to the invention.

As can be seen from the figures, the machine 2 comprises a portion 3, which preferably constitutes the basement the machine itself, and on which a support structure and guide 4', which is fixed and is essentially vertical, and a mobile unit 4" which slides vertically with respect to the supporting structure 4' and is provided with a horizontal arm 5 which faces the upper base 6 of the portion 3.

Moreover, on the arm 5 a cutter ing cutter 7 and a feeler element 8 are mounted. Suitably, the cutter 7 and the feeler element 8 are mounted on the arm 5 so as to be integral with each other. Conveniently, the horizontal arm 5, with the cutter 7 and the feeler element 8, are vertically slidable with respect to the supporting structure 4'.

In particular, the cutter 7 comprises a mandrel 10 on which is mounted a tool 11. Preferably, the cutter 7 is of the manual type and, for this reason, is provided at one of its ends with a knob 9 to cause the manual rotation of tool 11. Conveniently, in another embodiment, a motor (not shown) can be provided for the rotation of the cutter 7.

Suitably, the top base 6 of the portion 3 presents, in correspondence of the areas facing the cutter 7 and the feeler element 8, respective through openings 12 and 13.

The machine 2 according to the invention also comprises at least two modules which act essentially as jigs, and in particular a first jig module or 20 and second jig module 30.

In particular, the key is intended to be inserted/placed on the first jig module 20 so as to correctly and accurately define the area, along the stem 54 of the key itself, to face the tip of the tool 11 of the cutter 7, and this in order to define precisely the area in which to perform, by means of the cutter 7, a corresponding marking (groove or punching) which helps to define the encryption of the key itself.

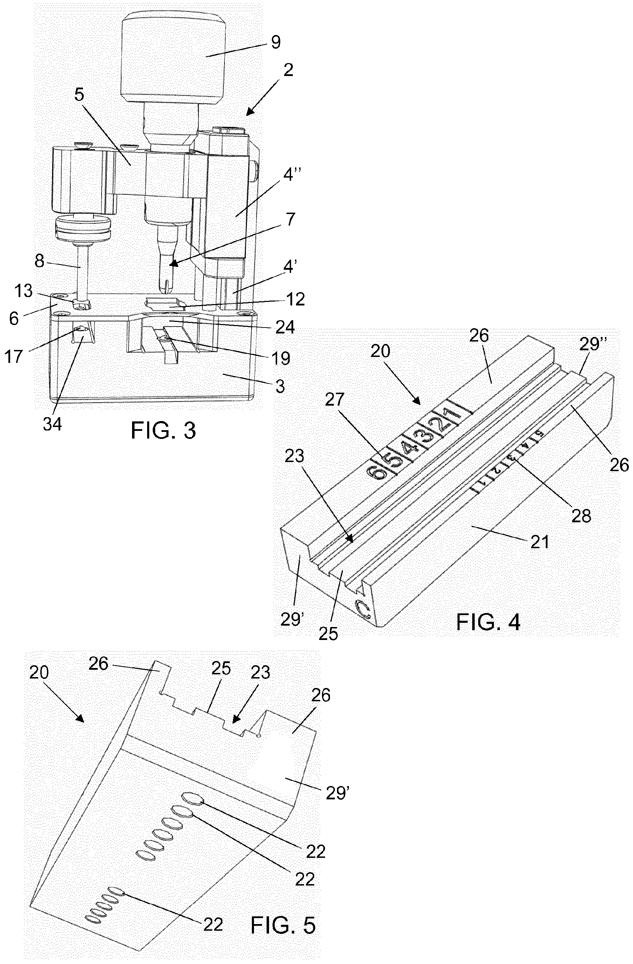

Conveniently, as shown in more detail in Fig. 4, the first jig module 20 comprises an elongated element 21, preferably of an essentially parallelepipedical shape, provided with a longitudinal seat 23 for the stem 54 of the key 50 to be machined. Preferably, the longitudinal seat is defined by a groove 25 of corresponding width and suitable to allow insertion and support of the stem 54 of a key 50 to be machined in the machine 2.

Conveniently, the depth of the groove 25 of the first jig module 20 is such that when the stem 54 of the key 50 to be machined is inserted/supported in said groove, the exposed surface of said key is essentially coplanar with the non-grooved portions 26 of the form itself. Advantageously, in this way, during the processing performed by means of the cutter 7, the stem 54 of the key 50 to be machined is clamped between the bottom of the groove 25 and the lower surface of the base 6 of the portion 3, thus blocking the longitudinal and/or transverse displacement of the stem 54 of the cross key to be machined.

The first jig module 20 is then inserted movably/slidable inside a first operative seat 24 defined in the portion 3 so that different areas of the key 50 stem 54 to be machined, which is mounted/supported on said module, can be brought in correspondence with the area of action of the cutter 7.

Preferably, for this purpose, the first seat 24 is defined by a cavity communicating at the top with the through opening 12 of the upper base 6 of portion 3.

Advantageously, the first module 20 presents on its bottom a series of suitably aligned recesses 22, which cooperate with the projection 19, preferably rounded, provided on the base of the first seat 24. Conveniently, the engagement of the projection 19 in the various recesses 22 causes an essentially erratic movement/sliding of the first jig module 20 inside the seat 24 and this provides the operator with a sensitive haptic (tactile) perception of the movement of said module; moreover, advantageously, this allows to identify in a precise and repeatable manner the various positions of the jig module 20 inside the first seat 24.

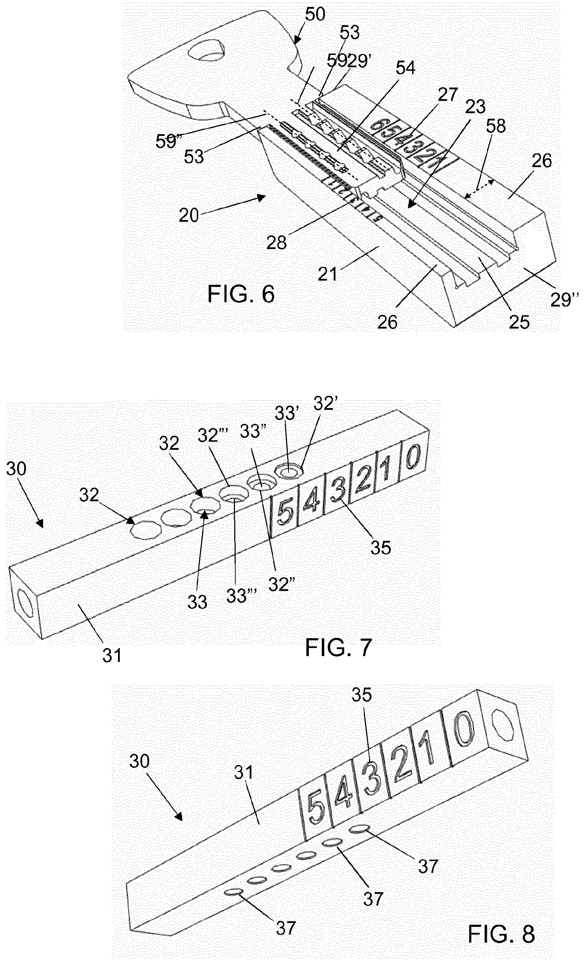

Conveniently, as shown in Fig. 6, the key 50 to be machined is inserted/positioned within the longitudinal seat 23 of the first module 20 until its end stop 53 abuts against the front face 29'or 29" of the non-grooved portions 26 of said form.

Advantageously, the first jig module 20 comprises, preferably at its upper surface and/or an area easily visible even when the key is inserted inside the portion 3, at least a series 27 and/or 28 of marks to facilitate univocal identification of the stem part 54 of the key to be machined inside the first operative seat 24 defined in the portion 3.

Appropriately, it is understood that to derive a particular and identical encryption symmetric on both faces of a key, it is sufficient to remove the stem of the latter from the groove 25 of the first jig module 20, turn the key upside down (i.e. rotate it 180° around its longitudinal axis) then insert it and again on its stem 54 within the groove 25 so that its end stop 53 abut against the same front face 29' or 29" of the first jig module 20.

Advantageously, the first jig module 20 has two series 27 and/or 28 of marks which are formed by marks or lines in a progressive way in two opposite verses. Appropriately, this is advantageous as it allows to univocally identify the part of stem 54 to be coded even in the presence of two distinct longitudinal axes (paths) of encryption 59' and 59" which are obtained on the same face of the key. More in detail, by axis (path) of encryption it is meant a sequence of areas, in which to obtain a corresponding marking (groove or punching), which are aligned along a same longitudinal axis which crosses the stem 54 of the key itself.

In particular, when the key 50 to be machined is inserted/positioned within the longitudinal seat 23 of the first jig module 20 so that its end stop 53 abuts against the front face 29' of the first module (see Figure 6), the encryption areas along the axis (path) 59" are univocally identified by the second set of marks 28; on the contrary, when the key 50 to be machined is inserted/positioned inside the longitudinal seat 23 of the first jig module 20 so that its end stop 53 abuts against the other front face 29" of the module itself, the encryption areas along the other axis (path) 59' are uniquely identified by the first set of marks 27. Preferably, the two series 27 and/or 28 of marks are obtained on distinct non-slotted portions 26.

Furthermore, in the case of keys to be encrypted which have two or more longitudinal axes (paths) of encryption at each face, it is necessary to use, at different times, more first jig modules 20. In particular, in this case, the key to be machined must be inserted and positioned on more than one first jig modules 20 having the non-grooved portions 26 of different widths 58 so as to vary transversely the region of the stem 54 facing the tip of the tool 11 of the cutter 7. Basically, according to the width 58 of the non-grooved portions 26 of the first jig modules 20 used, corresponding areas to mark the stem 54, which however all belong to or same axis and longitudinal e encryption are facing the tip of the tool 11 of the cutter 7.

Conveniently, the first 27 and/or second marks 28 may consist of a plurality of preferably numerical or alphanumeric writings, and/or a plurality of notches appropriately spaced and arranged in an ascending order along the longitudinal extension of the first jig module 20.

Advantageously, the cavity defining the first seat 24 and the bottom or the side walls of the first jig module 20 are shaped and/or provided with means for guiding the sliding of said module inside and along the seat itself.

In particular, the second jig module 30 is mounted on the portion 3 so as to be facing the tip of the feeler 8 and cooperate with the latter, and this in order to precisely define the depth at which to perform, by means of the cutter 7 which it is integral with the feeler 8, a corresponding marking (groove or punching) on the stem 54 of the key 50 to be machined which is mounted on the first jig module 20.

More in detail, the second jig module 30 comprises an elongate body 31, preferably of essentially parallelepipedical shape, provided on a (upper) surface with a series of blind holes 32 spaced apart and of different depths, preferably sorted ascending. Conveniently, the base 33 of each hole 32 is designed to cooperate and come into contact with the tip of the feeler 8.

The second jig module 30 is then movably/slidingly inserted inside a second operative seat 34 defined in the portion 3 so that the various holes 32 of said module can be brought in correspondence with the area of action of the feeler 8.

Preferably, to this end, the second seat 34 is defined by a cavity communicating at the top with the through-opening 13 of the upper base 6 of portion 3.

Advantageously, the second jig module 30 comprises, at its side surface and/or an area easily visible even when it is inserted inside the portion 3, a third series of marks 35 to facilitate the univocal identification of the hole 32 which is located facing said marks and which is intended to cooperate with the tip of the feeler 8. Appropriate, the third marks 35 may consist of a plurality of preferably numerical or alphanumeric writings, and/or a plurality of suitably spaced notches and sorted ascending along the longitudinal development of the second jig module 30.

Advantageously, the cavity defining the second seat 34 and the side walls of the second jig module 30 are shaped and/or provided with means for guiding the sliding of said module inside and along the seat itself.

Advantageously, the second jig module 30 has on its bottom a series of appropriately aligned recesses 37 which cooperate with the protrusion 17, preferably rounded, provided on the bottom wall of the second seat 34. Conveniently, the engagement of the protrusion 17 in the various recesses 37 causes an essentially erratic movement/sliding of the second jig module 30 inside the seat 34 and this provides the operator with a sensitive haptic (tactile) perception of the movement of said module; moreover, advantageously, this allows to identify in a precise and repeatable manner the various positions of the jig module 20 inside the first seat 24.

Conveniently, in a version not shown here of the second jig module 30, the latter can comprise an elongated element with a stepped profile in which each step defines an area of different depth essentially corresponding to that provided by the base 33 of the holes 32 of the embodiment shown in the drawings and described below. In essence, the elongated body 31 of the jig module 30 is configured so as to comprise a plurality/series of portions (such as the base 33 of the holes 32) of different depths with respect to the maximum height of the body itself. It is therefore understood that everything described below with reference to the embodiment which provides holes 32 with the base 33 at different depths, also applies to the embodiment with the step profile or other embodiments which essentially present more portions of different depths.

Alternatively, in an embodiment of the machine 2 not shown here, the first operative seat 24 for the first jig module 20 is formed in the portion 3 while the second operative seat 34 for the second jig module 30 is formed in the mobile unit 4", or viceversa. Appropriately, in an embodiment of the machine 2 not shown here, the unit 4" - on which the cutter ing cutter 7 is mounted, side by side and integral, can be fixed while the portion 3 is configured to approach or move away with respect to said unit 4".

The method, which uses the machine 2 according to the invention, for obtaining an encrypted key capable of opening a traditional cylindrical piston lock 40, without having available and without having to start from an original key, provides a sequence of operational steps, which are listed and described below.

In particular, as mentioned, the cylindrical piston lock 40 is preferably of the conventional type and comprises a stator 41 (fixed component), a rotor 42 (moving component) and a system comprising a plurality of springs 43 with corresponding upper 44 and lower 45 pistons ("pins"), which are aligned within respective channels. When no key is inserted inside the lock 40 or a key with the wrong encryption is inserted, the springs 43 acting on the piston 44, which in turn act on the lower piston 45, pushing down both said pistons 44 and 45 which, being interposed inside each channel between the stator 41 and the rotor 42, prevent rotation of the latter. On the contrary, when the key with the correct encryption (i.e. the one able to unlock the lock itself) is inserted inside the lock 40, the notches 51 which define the key-coding 50 push the lower pistons 45, in contrast with the action of the springs 43, so that the contact areas 46 between all the upper 44 and the lower 45 pistons are aligned with the inner surface of the stator 41 and to the outer surface of the rotor 42, so as to allow it to rotate inside the stator. More in detail, in essence, to allow rotation of the rotor 42 relative to the stator 41, and then the opening/unlocking of the lock 40, the notches 51 of the encryption key 50 must present location and depth such as to ensure that all the lower pistons 45 are completely housed inside the rotor 42 and all the upper pistons 44 are completely housed inside the stator 41.

The method according to the invention provides a first step in which a raw key 50 is identified which has a profile suitable for being inserted within the lock 40 of which an encrypted key is to be obtained which is able to open/unlock it. In particular, it is understood that, on the basis of the lock 40, an expert person is able to identify, possibly even for subsequent attempts, the raw starting key 50 which has the profile suitable for being inserted inside the lock itself.

Obviously, the stem 54 of the raw starting key 50 is initially free of any groove or punching. In particular, as mentioned, the quarries, in their particular combination in terms of both position and depth which define the particular encryption key that consent to the latter and to open a particular lock.

Conveniently, the starting raw key 50 has at least one outer/superficial layer of malleable material. Advantageously, the key 50 has an inner core made of a suitably hard material (for example steel, aluminium and iron), in order to allow its rotation inside the lock 40, and an outer (i.e. superficial) layer of malleable material. Preferably, this malleable outer layer is made of a soft and ductile material, in particular in tin or in polymeric material, such as for example PVC or PP suitably loaded.

Suitably, the outer layer is made of malleable material has a depth essentially corresponding to or greater than the maximum depth of the notches 51 you expect to have for the key type.

Advantageously, the raw starting key 50 with an external/surface layer of malleable material is obtained by annealing, preferably by heating at a temperature of about at least d 400°C, a traditional raw key that is made entirely or superficially brass.

Suitably, the raw starting key 50 can be entirely made of a single homogeneous material of adequate hardness. Preferably, the starting raw key 50 can be made entirely and only of brass, which is annealed, preferably at about 400°C, so as to obtain said external/superficial layer of malleable material.

The method according to the invention comprises a series of steps, described below, which are repeated cyclically at least once (cycle). In particular, each cycle includes the following steps:
- the raw key 50 to be machined, which has an outer/superficial layer of malleable material, is inserted within the lock 40 to open/unlock and the user tries, with a little effort, to rotate said key within the latter thus stimulating at least an attempt to opening,
- the key 50 is extracted from the lock 40 and the signs are identified thereon - which were not present before carrying out the aforementioned opening attempt - that the pistons of the lock itself have left on the surface of the outer layer of malleable material of said key following the aforementioned opening attempt,
- on the basis of these signs, the first jig module 20 and the second module 30 to be used, are identified/suitably chosen,
- the second jig 30 so identified, is positioned within its operative seat 34 provided in the machine 2 so that a hole 32 of a given depth is brought into correspondence with the area of action of the feeler 8 of said machine,
- the key 50 is positioned/inserted in the first module 20 previously identified and in sequence the latter moves inside its operative seat 24 provided in the machine 2 in one or more positions, in each of which a different area of the stem 54 of the key 50 which has a sign, as previously identified, is brought in correspondence with the area of action of the cutter 7; moreover, for each position of the first jig module 20 inside its seat 24 (and therefore for each sign present in the stem 54 of the key 50) a corresponding machining operation is carried out by means of the cutter 7 in order to obtain in correspondence with this sign, a notch 51 of depth that substantially corresponds to that of the hole 32 of the second jig module 30 which is facing/aligned with the tip of the feeler 8 and this in view of the fact that the base 33 of this hole 32 interacts with the tip of the feeler 8 integral with the cutter ing cutter 7.

In each cycle the above sequence of steps is repeated by modifying the position of the second jig module 30 within its operative seat 34 so that a hole 32 of a different depth, preferably greater than that of the hole of the previous cycle, is brought in correspondence with the area of action of the feeler 8, and in particular it is facing/aligned with the tip of said feeler. Appropriately, it is understood that in each cycle the surface of the outer layer of malleable material of key 50 new signs, which were not present in the previous cycles, and which are left following the last attempt to open the lock 40 are identified.

Conveniently, at the end of each cycle, the key 50 has at least one notch 51 which has a different depth, and in particular greater depth, than the previous cycle.

Advantageously, the aforesaid operations are cyclically repeated - possibly also by repositioning the key 50 inside the same and/or a further first module 20, as well as identifying and using a second jig module 30 with a different reciprocal distance between the holes 32 - and this until the key 50, which is inserted and rotated inside the lock 40, allows the opening/release of the latter. Appropriately, this means that, following the last cycle carried out, a key 50 has been obtained which has been completely and correctly coded, i.e. a key 50 in which all the notches 51 have a depth suitable to allow all the lower pistons 45 of the lock 40 being entirely housed in the rotor 42 so that the latter rotates freely and completely inside the stator 41, thereby opening/unlocking the lock 40.

Appropriately, as said, on the basis of the marks left on the raw key 50 following the first attempt at opening, the method according to the invention comprises a phase in which the first module 20 and the second jig module 30 are also correspondingly selected. Appropriately, the first jig module 20 is chosen so as to present a longitudinal seat 23 of corresponding length and width and suitable to allow insertion and support of the raw starting key 50 and in particular of its stem 54. Further, the first jig module 20 is identified/selected in such a way to appropriately define the transverse position on the stem 54, of the longitudinal encryption axis (path) (i.e. of the longitudinal axis along which the notches 51 of the encryption are aligned), as well as to present a plurality of marks 28 adapt to identify, for that specific type of raw key 50, all possible areas of the stem 54 where there might be obtained the corresponding notches 51 of the encryption. Conveniently, it is understood that, if the signs left on the raw key 50 show the presence of three or more ciphering axes, the method provides for the identification, and therefore the use, of two or more corresponding first modules 20 in order to derive on the stem 54, the notch 51 that belong to three (or more) distinct longitudinal axes of the encryption.

Conveniently, the second jig module 30 is identified/selected so as to present a series of holes 32 or portions of different depths which are positioned at a mutual distance corresponding to that of the marks left on the raw key 50 and, advantageously, these portions 32 are suitable to identify all the possible depths that could present the corresponding notches 51 of that particular type of raw key 50.

In this regard, it is understood that, on the basis of the signs left on the raw starting key 50 following the first and/or subsequent attempts at opening, a skilled person is able to easily identify/choose, possibly even for subsequent attempts, the first 20 and the second 30 jig module which have the aforementioned characteristics.

Conveniently, once the jig modules 20 and 30 have been identified/chosen, they are inserted inside the respective operative seats 24, 34 formed in the portion 3 of the machine 2.

More in detail, in the first cycle of the method according to the invention, the raw starting key 50, previously identified and of suitable profile, is inserted in the lock 40 and, trying to rotate the key inside of the lock itself, a first attempt is made to open it with a little effort. Appropriately, this operation causes the lowering of the lower pistons 45, due to their contact areas 46 with the upper pistons 44 pushed by the springs 43, and these lower pistons 45, coming into contact with the surface of the external malleable layer of the raw key 50, form signs on the latter, in particular in the form of depressions, more or less visible.

Once the key 50 so marked by the lock 40 has been extracted, the marks left by the lower pistons 45 of the lock 40 are identified on the outer surface of the layer of malleable material of the key 50. Suitably, a magnifying glass can be used in order to facilitate such identification.

The corresponding first jig modules 20 and 30 are then selected on the basis of the marks left on key 50, and in particular on the basis of the number of these signs and their mutual distance along the longitudinal axis; appropriately, on the basis of the number and the position of the longitudinal axes along which these signs are aligned, identify how many and which first modules 20 to be used.

The key 50 thus marked is then inserted and positioned in the longitudinal seat 23 of the first jig module 20 thus identified. The second jig module 30 is made to slide inside its second operative seat 34 so that a first hole 32', which is the one with the lowest depth (defined as "depth 1"), is brought in correspondence with the area of action of the feeler 8.

Then, the first jig module 20 is instead slid inside its first operative seat 24 so as to bring it into a plurality of positions in each of which a region of the stem 54 of the key 50 which has a sign is brought to correspond of the area of action of the cutter 7. Suitably, the areas of stem 54 of the key 50 to be machined with the cutter 7 (and hence the positions of the first jig module 20 within its operative seat 24) are identified using the markings provided in that jig module 20 and they are identified in a precise and repeatable manner following the engagement of the projection 19 with the various notches 51 provided on the first jig module 20.

In particular, for each sign present in the stem 54 of the key, a corresponding machining operation is carried out by means of the cutter 7 so as to obtain notches 51 of depth corresponding to that defined by the feeler 8 which, with its tip, cooperates with the base 33' of the first hole 32'. In this way, therefore, a plurality of notches 51 of depth corresponding to the "depth 1" are obtained on the raw starting key 50.

Subsequently, the key thus obtained is inserted in the lock 40 and the same sequence of operations is essentially repeated with the only difference that the second jig module 30 is slid inside its second operative seat 34 so that a second hole 32", which is the one that has a depth (called "depth 2") immediately greater than the previous "depth 1", is aligned/facing the tip of the feeler 8.

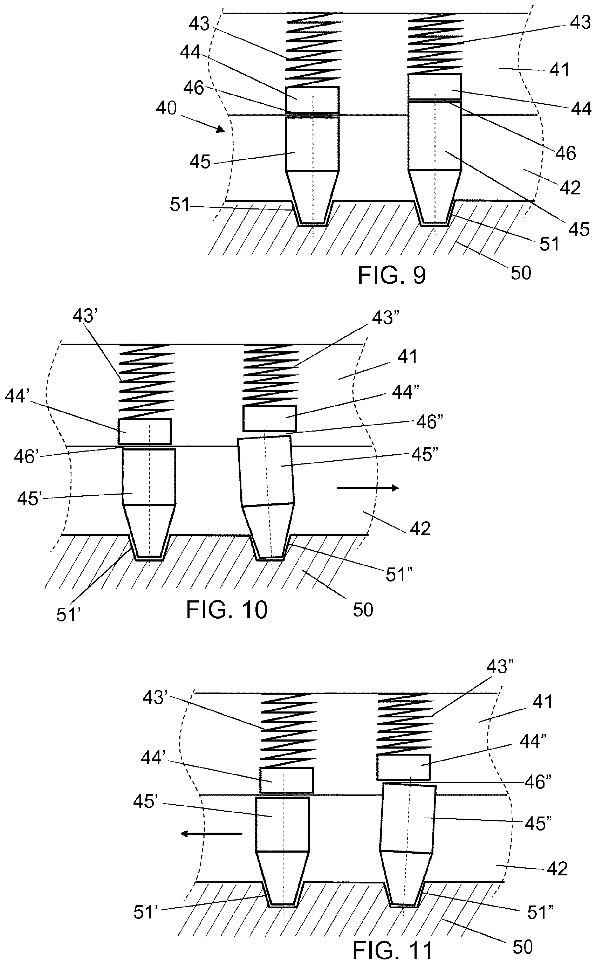

In particular, once inserted into the lock 40 (see. Fig. 9), the key 50 (which now has a series of notches 51 all having the same "depth 1") is rotated within the same lock, so stimulating a second attempt to open it.

Conveniently, this operation causes the lower pistons 45 to descend, due to their contact areas 46 with the upper pistons 44 pushed by the springs 43, and these lower pistons 45 enter into the notches 51 previously formed on the key 50.

More in detail, as shown in Fig. 10 and 11, in correspondence of a notch 51' the first inferior piston 45' enters into the latter in such a way that in its contact area 46' with the corresponding superior piston 44' results aligned to the inner surface of the stator 41 and the outer surface of the rotor 42; in other words, this means that the depth of a notch 51' is already correct and that the corresponding first inferior piston 45' lies entirely inside the rotor 42. Therefore, this piston 45' would be free to rotate with the rotor 42, however it will not rotate as the second lower piston 45" is still interposed between the rotor 42 and the stator 41. More in detail, as a result of a subsequent attempt to open the lock, the piston 45' always remains perpendicular to the surface of the key 50 and, therefore, it not is pressed to leave any sign on said surface of the outer malleable layer of the same key.

Moreover, as shown in figures 10 and 11, in correspondence with the second notch at 51", the area 46" defined between the second inferior piston 45" and the corresponding superior piston 44" does not result aligned to the inner surface of the stator 41 and the outer surface of the rotor 42; In other words, this means that the depth of notch 51" is still not correct and that the corresponding and second inferior piston 45" is located between the stator 41 and the rotor 42 and, therefore cannot freely rotate with the latter. More in detail, a portion of said second inferior piston 45" is driven in rotation by the rotor 42 while the opposite portion is retained in the corresponding stator channel 41 and, therefore, this and piston tilts slightly. This inclination - that suitably can be obtained attempting to rotate, in sequence, the key 50 into the lock 40 in a clockwise direction (see. Fig. 10) or counter clockwise (see Fig. 11) - causes a contact and an action of the head of the second lower piston 45" on the surface of the outer malleable layer of the key 50, thus leaving marks (traces) thereon. In particular, these marks are left on the bottom and/or on the side surfaces of the notches 51" which are not yet of the correct depth.

Once the key 50 has been extracted again so marked by the lock 40, the new marks left inside the notches 51 are identified by the lower pistons 45 of the lock 40. Then, the key 50 so marked is inserted and positioned in the longitudinal seat 23 of the first jig module 20. As said, the second jig module 30 is slid inside its second operative seat 34 so that a second hole 32", of "depth 2" greater than the "depth 1" of the hole 32', is brought in correspondence with the area of action of the feeler 8.

The first jig module 20 is instead slid inside its first operative seat 24 so that each region of the stem of a key 50 presenting a new sign, following this second insertion in the lock 40, is brought to the area of action of the cutter 7. Conveniently, the areas of the stem 54 to be machined with the cutter 7 (and therefore the positions of the first jig module 20 inside its operative seat 24) are identified by using the marks provided in this jig module 20 and they are identified in a precise and repeatable manner following the engagement of the projection 19 with the various notches 51 provided on the first jig module 20.

Then, for each new sign present in the stem 54 of the key 50, a corresponding machining of the notches 51 is performed by means of the cutter 7 which are marked in such a way to bring them to a total depth corresponding to that defined by the feeler 8 which cooperates with the base 33" of the second hole 32".

In this way, therefore, the notches 51 of the key 50 that were already correct remain at the "depth 1" since they do not show any sign, while those that result marked are further excavated by the cutter 7 so as to bring them to the "depth 2".

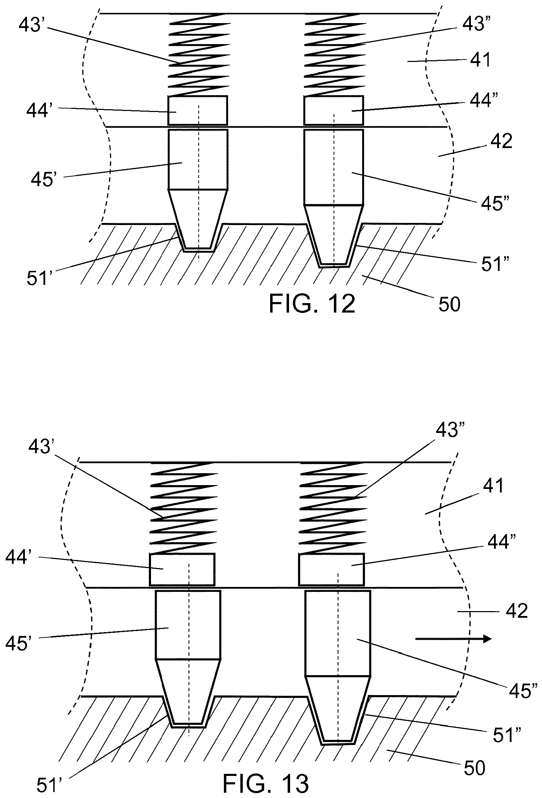

As shown in Figures 11 and 12, by inserting inside the lock 40 the key 50 thus obtained, the first inferior piston 45' enters into notch 51'"depth 1" while the second inferior piston 45" enters into notch 51" which now is located at the "depth 2". In this way, therefore, both the lower pistons 45' and 45" are located entirely in the rotor 42 and, therefore, can rotate freely with the latter always remaining perpendicular to the surface of the key 50, leaving no sign or trace on said surface of the outer malleable layer of the key itself.

It is understood that the aforementioned sequence of operations is opportunely repeated cyclically for all the subsequent depths of the holes 32 provided in the second jig module 30 and/or until a key 50 is obtained in which all the notches 51 have a depth suitable to allow all the lower pistons 45 of the lock 40 to be entirely housed in the rotor 42 so that the latter rotates freely and completely inside the stator 41, thereby opening/unlocking the lock 40.

Advantageously, by using the conventional duplicating systems and machines on the key 50 thus obtained, a copy key can then be obtained which is entirely made of rigid material (i.e. without the outer layer of malleable material).

Conveniently, the invention also includes a set of elements to be used for the machining of a key 50, preferably for processing aimed at defining the encryption of said key 50. In particular, this set comprises a machine 2 and a plurality of first 20 and second jig modules 30, each of which is adapted to be removably inserted and to slide inside the respective operative seats 24, 34 formed in the portion 3 of the machine itself. Advantageously, the set of elements also comprises a case-like container which is provided inside a seat for housing the machine and at least a seat for housing the first modules 20 and the second modules 30. Preferably, the housing site for the machine 2 is configured and dimensioned to accommodate said machine 2 when the respective operative seats 24, 34 are empty, i.e. when they are without the jig modules 20 and 30.

The solution according to the invention is particularly advantageous because:
- allows to obtain a copy key from the lock only and without having the original key available,
- the machine is easy and simple to use, and the relative method is particularly intuitive,
- the machine is small and can be easily transported, for example inside a case, near the lock, and
- it is simple and easy to make.

## Claims

1. Machine (2) for processing a key (50), preferably for machining aimed at defining the encryption of said key (50), comprising:
- a unit (4") on which a mill cutter (7) and a feeler (8) are mounted, side by side and joined together, said unit (4") being movable with respect to a portion (3) which faces said mill cutter (7), and said feeler (8), or vice versa,
- at least a first operative seat (24) and at least a second operative seat (34), respectively facing said mill cutter (7) and said feeler (8), and formed in said portion (3) and/or in said unit (4"),
**characterized in that** the machine further comprises:
- at least a first jig module (20), which is configured to receive at least the stem (54) of said key to be machined (50), which is removably inserted, at least in part, into said first operative seat (24) and which is slidable inside it so that said cutter (7) is facing, and can thus work in sequence, on different regions of said stem (54) of said key (50),
- at least a second jig module (30), which is configured so as to comprise portions (33) of different depths, which is removably inserted, at least in part, into said second operative seat (34) and which is slidable inside it that said feeler (8) is facing, and can come into contact with its tip, with one of said portions (33).

2. Machine according to claim 1, **characterized in that** said portions of different depths comprise a series of blind holes (32) whose bottom (33) has different depths.

3. Machine according to one or more of the preceding claims, **characterized in that** said first jig module (20) comprises a longitudinal groove (25) with a width configured in order to allow the insertion and stable housing of the stem (54) of a key (50).

4. Machine according to one or more of the preceding claims, **characterized in that** said first operative seat (24) comprises a cavity which is defined in said portion (3) and is closed at the top by a base (6) provided with an opening (12) facing said cutter (7) and communicating with said first operative seat (24), said first jig module (20) and said upper base (6) being configured in such a way to cooperate to clamp the stem (54) of said key (50) to be machined when it is inserted in said first jig module (20).

5. Machine according to one or more of the preceding claims, **characterized in that**:
- said first jig module (20) has a series of recesses (22) which cooperate with a projection (19) provided on a wall of said first seat (24), or vice versa, to allow the sliding step by step of the first jig module (20) in its seat, and/or
- said second jig module (30) has a series of recesses (37) which cooperate with a protrusion (17) provided on a wall of said second seat (34), or vice versa, to allow the sliding of the second jig module (30) in its seat (34).

6. Machine according to one or more of the preceding claims, **characterized in that**:
- said first jig module (20) has at least one set of marks (27, 28) to facilitate the unambiguous identification of the position of the first module (20) inside the first operative seat (24), and/or
- said second jig module (30) has at least one series of marks (35) to facilitate the unambiguous identification of the position of the second module (30) inside the second operative seat (34).

7. Set of elements for processing a key (50), preferably for processing aimed at defining the encryption of said key (50), **characterized in that** it comprises a machine (2) according to one or more of the claims from 1 to 6.

8. Set according to the previous claim, **characterized in that** it also comprises:
- a plurality of first jig modules (20), each of which is shaped to be removably insertable and slidable inside said first operative seat (24) obtained in said portion (3) and/or in said unit (4"), and/or
- a plurality of second jig modules (30), each of which is shaped to be removably insertable and slidable inside said second operative seat (34) obtained in said portion (3) and/or in said unit (4").

9. Set according to claims 7 or 8, **characterized in that**:
- each first jig module (20) comprises a longitudinal groove (25) which is interposed between two non-grooved side portions (26) and which has a width suitable for allowing the insertion and stable housing of the stem (54) of a key (50),
- said first jig modules (20) have non-grooved portions (26) of various widths so to modify, in a transverse sense the region of the stem (54) of the key (50) to face said cutter (7).

10. Method for obtaining a key capable of opening a lock having available and starting from said lock (40), **characterized in that** it uses a machine (2) according to one or more of the claims from 1 to 6.

11. Method according to the previous claim, **characterized in that** the raw starting key (50), to be worked with the machine according to one or more of the claims from 1 to 6, comprises at least one outer and superficial layer made of malleable material.

12. Method according to claim 11, **characterized in that** said raw starting key (50) with an external/superficial layer made of malleable material is obtained by a further thermal treatment of a traditional raw key which is entirely made of brass.

13. Method according to one or more of the previous claims, **characterized in that** it comprises the following steps.
- inserting the raw key (50) to be machined, which has an outer/superficial layer of malleable material, in a lock (40) to be opened/unlocked and attempt is made to rotate said key inside the latter, thus stimulating at least an opening attempt,
- the key (50) is extracted from the lock (40) and the signs are identified thereon which the pistons of the lock have left on the surface of the outer layer of malleable material of said key following said opening attempt,
- on the basis of the signs that the lock pistons have left on the surface of the outer layer of malleable material of said key following said opening attempt, at least one first jig module (20) and at least one second jig module (30) to be used are identified,
- the second jig module (30) thus identified, is positioned inside its operative seat (34) provided in the machine (2) so that a portion (33) of a given depth is brought in correspondence with the area of action of the feeler (8) of said machine,
- the key (50) is positioned in the first jig module (20), thus identified, and in consequence the first jig module (20) is moved inside its operative seat (24) so that each region of the stem (54) the key (50) which has a sign is brought in correspondence with the area of action of the cutter (7), and for each sign present in the stem (54) of the key (50) a corresponding machining operation is carried out by means of the mill cutter (7) to obtain in correspondence with said sign a notch (51) of depth corresponding to that of the portion (33) of the second jig module (30) which is facing/aligned with the feeler (8) and which interacts with the latter.

14. Method according to one or more of the preceding claims, **characterized in that** said passages are cyclically repeated several times until a key (50) is obtained which, once inserted and rotated inside the lock (40), is able to open/unlock it and **in that**:
- in each cycle, the second jig module (30) is positioned inside its operative seat (34) provided in the machine (2) so that, in correspondence with the area of action of the feeler (8) of said machine, there is a portion (33) of depth different from that which was facing the previous cycle, and
- in each cycle, on the surface of the outer layer of malleable material of the key (50), the new signs, which were not present in the previous cycles, are identified and left on said surface as a result of the last attempt to open the lock (40).

15. Method according to one or more of the preceding claims, **characterized in that** said passages are cyclically repeated several times until a key (50) is obtained which, once inserted and rotated inside the lock (40), is able to open/unlock said lock (40) and **in that**:
- at least one further first jig module (20) is identified which has non-grooved portions (26) of a different width with respect to that of the first jig module (20) already used, and
- the key (50) is positioned in said further first jig module (20) and in sequence it moves it within its operative seat (24) so that each region of the stem (54) of the key (50) which presents a sign is carried in correspondence with the area of action of the cutter (7).

## Patentansprüche

1. Maschine (2) zum Bearbeiten eines Schlüssels (50), vorzugsweise zu einem maschinellen Bearbeiten, das die Verschlüsselung des Schlüssels (50) definieren soll, umfassend:
- eine Einheit (4"), an der ein Fräser (7) und ein Fühler (8) Seite an Seite und miteinander verbunden befestigt sind, wobei die Einheit (4") in Bezug auf einen Abschnitt (3) bewegbar ist, der dem Fräser (7) und dem Fühler (8) zugewandt ist oder umgekehrt,
- mindestens einen ersten betreibbaren Sitz (24) und mindestens einen zweiten betreibbaren Sitz (34), die jeweils dem Fräser (7) und dem Fühler (8) zugewandt und in dem Abschnitt (3) und/oder in der Einheit (4") gebildet sind,
**dadurch gekennzeichnet, dass** die Maschine ferner umfasst:
- mindestens ein erstes Spannmodul (20), das dazu ausgelegt ist, mindestens den Schaft (54) des maschinell zu bearbeitenden Schlüssels (50) aufzunehmen, das entfernbar mindestens teilweise in den ersten betreibbaren Sitz (24) eingeführt ist und das darin verschiebbar ist, sodass der Schneider (7) verschiedenen Regionen des Schafts (54) des Schlüssels (50) zugewandt ist und diese somit sequenziell bearbeiten kann,
- mindestens ein zweites Spannmodul (30), das dazu ausgelegt ist, Abschnitte (33) mit verschiedenen Tiefen zu umfassen, das entfernbar mindestens teilweise in den zweiten betreibbaren Sitz (34) eingeführt ist und das darin verschiebbar ist, wobei der Fühler (8) einem der Abschnitte (33) zugewandt ist und mit seiner Spitze damit in Kontakt treten kann.

2. Maschine nach Anspruch 1, **dadurch gekennzeichnet, dass** die Abschnitte mit verschiedenen Tiefen eine Reihe von Blindlöchern (32) umfassen, deren Boden (33) verschiedene Tiefen aufweist.

3. Maschine nach einem oder mehreren der vorhergehenden Ansprüche, **dadurch gekennzeichnet, dass** das erste Spannmodul (20) eine Längsnut (25) mit einer Breite umfasst, die dazu ausgelegt ist, die Einführung und stabile Aufnahme des Schafts (54) eines Schlüssels (50) zu ermöglichen.

4. Maschine nach einem oder mehreren der vorhergehenden Ansprüche, **dadurch gekennzeichnet, dass** der erste betreibbare Sitz (24) einen Hohlraum umfasst, der in dem Abschnitt (3) definiert ist und an der Oberseite durch eine Basis (6) geschlossen ist, die mit einer Öffnung (12) versehen ist, die dem Schneider (7) zugewandt ist und mit dem ersten betreibbaren Sitz (24) kommuniziert, wobei das erste Spannmodul (20) und die obere Basis (6) derart ausgelegt sind, dass sie zusammenwirken, um den Schaft (54) des maschinell zu bearbeitenden Schlüssels (50) festzuspannen, wenn er in das erste Spannmodul (20) eingeführt ist.

5. Maschine nach einem oder mehreren der vorhergehenden Ansprüche, **dadurch gekennzeichnet, dass**:
- das erste Spannmodul (20) eine Reihe von Vertiefungen (22) aufweist, die mit einem an einer Wand des ersten Sitzes (24) bereitgestellten Vorsprung (19) zusammenwirken, oder umgekehrt, um das schrittweise Gleiten des ersten Spannmoduls (20) in seinem Sitz zu ermöglichen, und/oder
- das zweite Spannmodul (30) eine Reihe von Vertiefungen (37) aufweist, die mit einer an einer Wand des zweiten Sitzes (34) bereitgestellten Auskragung (17) zusammenwirken, oder umgekehrt, um das Gleiten des zweiten Spannmoduls (30) in seinem Sitz (34) zu ermöglichen.

6. Maschine nach einem oder mehreren der vorhergehenden Ansprüche, **dadurch gekennzeichnet, dass**:
- das erste Spannmodul (20) mindestens einen Satz von Markierungen (27, 28) aufweist, um die eindeutige Identifikation der Position des ersten Moduls (20) innerhalb des ersten betreibbaren Sitzes (24) zu erleichtern, und/oder
- das zweite Spannmodul (30) mindestens einen Satz von Markierungen (35) aufweist, um die eindeutige Identifikation der Position des zweiten Moduls (30) innerhalb des zweiten betreibbaren Sitzes (34) zu erleichtern.

7. Satz von Elementen zum Bearbeiten eines Schlüssels (50), vorzugsweise zu einem Bearbeiten, das die Verschlüsselung des Schlüssels (50) definieren soll, **dadurch gekennzeichnet, dass** er eine Maschine (2) nach einem oder mehreren der Ansprüche 1 bis 6 umfasst.

8. Satz nach dem vorhergehenden Anspruch, **dadurch gekennzeichnet, dass** er außerdem umfasst:
- eine Vielzahl von ersten Spannmodulen (20), von denen jedes geformt ist, um entfernbar innerhalb des ersten betreibbaren Sitzes (24), der in dem Abschnitt (3) und/oder in der Einheit (4") erhalten wird, einführbar und darin verschiebbar zu sein, und/oder
- eine Vielzahl von zweiten Spannmodulen (30), von denen jedes geformt ist, um entfernbar innerhalb des zweiten betreibbaren Sitzes (34), der in dem Abschnitt (3) und/oder in der Einheit (4") erhalten wird, einführbar und darin verschiebbar zu sein.

9. Satz nach Anspruch 7 oder 8, **dadurch gekennzeichnet, dass**:
- jedes erste Spannmodul (20) eine Längsnut (25) umfasst, die zwischen zwei nicht gerillten Seitenabschnitten (26) angeordnet ist und die eine Breite aufweist, die geeignet ist, um die Einführung und stabile Aufnahme des Schafts (54) eines Schlüssels (50) zu ermöglichen,
- die ersten Spannmodule (20) nicht gerillte Abschnitte (26) mit verschiedenen Breiten aufweisen, um die Region des Schafts (54) des Schlüssels (50) in einer Querrichtung zu modifizieren, sodass sie dem Schneider (7) zugewandt ist.

10. Verfahren zum Erzeugen eines Schlüssels, der in der Lage ist, ein Schloss zu öffnen, wobei das Schloss (40) verfügbar ist und von diesem ausgegangen wird, **dadurch gekennzeichnet, dass** es eine Maschine (2) nach einem oder mehreren der Ansprüche 1 bis 6 verwendet.

11. Verfahren nach dem vorhergehenden Anspruch, **dadurch gekennzeichnet, dass** der Rohausgangsschlüssel (50), der mit der Maschine nach einem oder mehreren der Ansprüche 1 bis 6 bearbeitet werden soll, mindestens eine Außen- und Oberflächenschicht aus verformbarem Material umfasst.

12. Verfahren nach Anspruch 11, **dadurch gekennzeichnet, dass** der Rohausgangsschlüssel (50) mit einer Außen-/Oberflächenschicht aus verformbarem Material durch eine weitere Wärmebehandlung eines herkömmlichen Rohschlüssels, der vollständig aus Messing besteht, erzeugt wird.

13. Verfahren nach einem oder mehreren der vorhergehenden Ansprüche, **dadurch gekennzeichnet, dass** es die folgenden Schritte umfasst.
- Einführen des maschinell zu bearbeitenden Rohschlüssels (50), der eine Außen-/Oberflächenschicht aus verformbarem Material aufweist, in ein zu öffnendes/entriegelndes Schloss (40), und wobei ein Versuch unternommen wird, den Schlüssel innerhalb des Letzteren zu drehen, wodurch mindestens ein Öffnungsversuch eingeleitet wird,
- der Schlüssel (50) wird aus dem Schloss (40) herausgezogen und die Spuren, die die Kolben des Schlosses auf der Oberfläche der Außenschicht aus verformbarem Material des Schlüssels nach dem Öffnungsversuch hinterlassen haben, werden darauf identifiziert,
- basierend auf den Spuren, die die Schlosskolben auf der Oberfläche der Außenschicht aus verformbarem Material des Schlüssels nach dem Öffnungsversuch hinterlassen haben, werden mindestens ein zu verwendendes erstes Spannmodul (20) und mindestens ein zu verwendendes zweites Spannmodul (30) identifiziert,
- das derart identifizierte zweite Spannmodul (30) wird innerhalb seines betreibbaren Sitzes (34), der in der Maschine (2) bereitgestellt ist, angeordnet, sodass ein Abschnitt (33) mit einer gegebenen Tiefe in Übereinstimmung mit dem Wirkbereich des Fühlers (8) der Maschine gebracht wird,
- der Schlüssel (50) wird in dem derart identifizierten ersten Spannmodul (20) angeordnet, und als Folge wird das erste Spannmodul (20) innerhalb seines betreibbaren Sitzes (24) bewegt, sodass jede Region des Schafts (54) des Schlüssels (50), die eine Spur aufweist, in Übereinstimmung mit dem Wirkbereich des Schneiders (7) gebracht wird, und für jede an dem Schaft (54) des Schlüssels (50) vorhandene Spur wird ein entsprechender maschineller Bearbeitungsvorgang mittels des Fräsers (7) ausgeführt, um in Übereinstimmung mit der Spur eine Kerbe (51) mit einer Tiefe entsprechend der des Abschnitts (33) des zweiten Spannmoduls (30), das dem Fühler (8) zugewandt und an diesem ausgerichtet ist und das mit dem Letzteren interagiert, zu erzeugen.

14. Verfahren nach einem oder mehreren der vorhergehenden Ansprüche, **dadurch gekennzeichnet, dass** die Durchgänge mehrere Male zyklisch wiederholt werden, bis ein Schlüssel (50) erzeugt wird, der, sobald er in das Schloss (40) eingeführt und in diesem gedreht wird, in der Lage ist, dieses zu öffnen/entriegeln, und dadurch dass:
- in jedem Zyklus das zweite Spannmodul (30) innerhalb seines betreibbaren Sitzes (34), der in der Maschine (2) bereitgestellt ist, angeordnet ist, sodass, in Übereinstimmung mit dem Wirkbereich des Fühlers (8) der Maschine, ein Abschnitt (33) mit einer Tiefe vorhanden ist, der von dem verschieden ist, der in dem vorhergehenden Zyklus zugewandt war, und
- in jedem Zyklus auf der Oberfläche der Außenschicht aus verformbarem Material des Schlüssels (50) die neuen Spuren, die in den vorhergehenden Zyklen nicht vorhanden waren und infolge des letzten Versuchs zum Öffnen des Schlosses (40) hinterlassen wurden, identifiziert werden.

15. Verfahren nach einem oder mehreren der vorhergehenden Ansprüche, **dadurch gekennzeichnet, dass** die Durchgänge mehrere Male zyklisch wiederholt werden, bis ein Schlüssel (50) erzeugt wird, der, sobald er in das Schloss (40) eingeführt und in diesem gedreht wird, in der Lage ist, das Schloss (40) zu öffnen/entriegeln, und dadurch dass:
- mindestens ein weiteres erstes Spannmodul (20) identifiziert wird, das nicht gerillte Abschnitte (26) mit einer verschiedenen Breite in Bezug auf das bereits verwendete erste Spannmodul (20) aufweist, und
- der Schlüssel (50) in dem weiteren ersten Spannmodul (20) angeordnet ist und von diesem sequenziell innerhalb dessen betreibbaren Sitzes (24) bewegt wird, sodass jede Region des Schafts (54) des Schlüssels (50), die eine Spur aufweist, in Übereinstimmung mit dem Wirkbereich des Schneiders (7) befördert wird.

## Revendications

1. Machine (2) de traitement d'une clé (50), de préférence pour un usinage visant à définir le cryptage de ladite clé (50), comprenant:
- une unité (4") sur laquelle sont montés côte à côte une fraise (7) et un palpeur (8), ladite unité (4") étant mobile par rapport à une portion (3) qui fait face à ladite fraise (7) et audit palpeur (8), ou vice versa,
- au moins un premier siège opérationnel (24) et au moins un deuxième siège opérationnel (34), respectivement tournés vers ladite fraise (7) et ledit palpeur (8), et formés dans ladite partie (3) et/ou dans ladite unité (4"),
**caractérisée en ce qu'**elle comprend :
- au moins un premier module de gabarit (20), qui est configuré pour recevoir au moins la tige (54) de ladite clé à usiner (50), qui est insérée de manière amovible, au moins en partie, dans ledit premier siège opérationnel (24) et qui peut coulisser à l'intérieur de sorte que ladite fraise (7) soit en face, et puisse ainsi travailler en séquence, sur différentes régions de ladite tige (54) de ladite clé (50),
- au moins un deuxième module de gabarit (30), qui est configuré de manière à comprendre des parties (33) de différentes profondeurs, qui est inséré de manière amovible, au moins en partie, dans ledit deuxième siège opérationnel (34) et qui peut coulisser à l'intérieur **en ce que** ledit palpeur (8) est en face, et peut venir en contact avec sa pointe, avec l'une desdites parties (33).

2. Machine selon la revendication 1, **caractérisée en ce que** lesdites portions de différentes profondeurs comprennent une série de trous borgnes (32) dont le fond (33) a des profondeurs différentes.

3. Machine selon une ou plusieurs des revendications précédentes, **caractérisée en ce que** ledit premier module de gabarit (20) comprend une rainure longitudinale (25) avec une largeur configurée pour permettre l'insertion et le logement stable de la tige (54) de une clé (50).

4. Machine selon une ou plusieurs des revendications précédentes, **caractérisée en ce que** ledit premier siège opérationnel (24) comprend une cavité qui est définie dans ladite partie (3) et est fermée au sommet par une base (6) munie d'un ouverture (12) faisant face à ladite fraise (7) et communiquant avec ledit premier siège opérationnel (24), ledit premier module de gabarit (20) et ladite base supérieure (6) étant configurés de manière à coopérer pour serrer la tige (54) de ladite clé (50) à usiner lorsqu'elle est insérée dans ledit premier module de gabarit (20).

5. Machine selon une ou plusieurs des revendications précédentes,
**caractérisée en ce que**:
- ledit premier module de gabarit (20) présente une série de cavités (22) qui coopèrent avec une saillie (19) prévue sur une paroi dudit premier siège (24), ou vice versa, pour permettre le coulissement pas à pas du premier module de gabarit (20) dans son siège, et/ou
- ledit deuxième module de gabarit (30) présente une série de cavités (37) qui coopèrent avec une saillie (17) prévue sur une paroi dudit deuxième siège (34), ou vice versa, pour permettre le coulissement du deuxième module de gabarit (30) dans son siège (34).

6. Machine selon une ou plusieurs des revendications précédentes, **caractérisée en ce que**:
- ledit premier module de gabarit (20) comprends au moins un jeu de repères (27, 28) pour faciliter l'identification sans ambiguïté de la position du premier module (20) à l'intérieur du premier siège opérationnel (24), et/ou
- ledit deuxième module de gabarit (30) présente au moins une série de marques (35) pour faciliter l'identification sans ambiguïté de la position du deuxième module (30) à l'intérieur du deuxième siège opérationnel (34).

7. Ensemble d'éléments pour traiter une clé (50), de préférence pour un traitement visant à définir le cryptage de ladite clé (50), **caractérisé en ce qu'**il comprend une machine (2) selon une ou plusieurs des revendications 1 à 6 .

8. Ensemble selon la revendication précédente, **caractérisé en ce qu'**il comprend également:
- une pluralité de premiers modules de gabarit (20), dont chacun est conformé pour être insérable et coulissant de façon amovible à l'intérieur dudit premier siège opérationnel (24) obtenu dans ladite partie (3) et/ou dans ladite unité (4"), et/ou
- une pluralité de seconds modules de gabarit (30), dont chacun est conformé pour être insérable et coulissant de manière amovible à l'intérieur dudit second siège opérationnel (34) obtenu dans ladite partie (3) et/ou dans ladite unité (4").

9. Ensemble selon les revendications 7 ou 8, **caractérisé en ce que**:
- chaque premier module de gabarit (20) comprend une rainure longitudinale (25) qui est interposée entre deux parties latérales non rainurées (26) et qui a une largeur adaptée pour permettre l'insertion et le logement stable de la tige (54) d'une clé (50),
- lesdits premiers modules de gabarit (20) présentent des parties non rainurées (26) de différentes largeurs de manière à modifier, dans un sens transversal la région de la tige (54) de la clé (50) pour faire face à ladite fraise (7).

10. Procédé d'obtention d'une clé apte à ouvrir une serrure disposant et partant de ladite serrure (40), **caractérisé en ce qu'**il utilise une machine (2) selon une ou plusieurs des revendications 1 à 6.

11. Procédé selon la revendication précédente, **caractérisé en ce que** la clé de départ brute (50), à travailler avec la machine selon une ou plusieurs des revendications 1 à 6, comprend au moins une couche externe et superficielle en matériel malléable.

12. Procédé selon la revendication 11 **caractérisé en ce que** la clé de départ brute (50), avec une couche externe et superficielle en matériel malléable est obtenue par un traitement thermique additionnel d'une clé traditionnelle qui est entièrement faite de laiton.

13. Procédé selon une ou plusieurs des revendications précédentes, **caractérisé en ce qu'**il comprend les étapes suivantes :
- insérer la clé brute (50) à usiner, qui présente une couche externe/superficielle de matériel malléable, dans une serrure (40) à ouvrir/déverrouiller et tenter de faire tourner ladite clé à l'intérieur de celle-ci, stimulant ainsi au moins une tentative d'ouverture,
- la clé (50) est extraite de la serrure (40) et on y identifie les signes que les pistons de la serrure ont laissés à la surface de la couche externe de matériel malléable de ladite clé suite à ladite tentative d'ouverture,
- sur la base des signes que les pistons de serrure ont laissé à la surface de la couche externe de matériel malléable de ladite clé à la suite de ladite tentative d'ouverture, au moins un premier module de gabarit (20) et au moins un deuxième module de gabarit (30) à utiliser sont identifiés,
- le deuxième module de gabarit (30) ainsi identifié, est positionné à l'intérieur de son siège opérationnel (34) prévu dans la machine (2) de sorte qu'une portion (33) d'une profondeur donnée soit mise en correspondance avec la zone d'action du palpeur (8) de ladite machine,
- la clé (50) est positionnée dans le premier module de gabarit (20), ainsi identifié, et en conséquence le premier module de gabarit (20) est déplacé à l'intérieur de son siège opérationnel (24) de sorte que chaque région de la tige (54) de la clé (50) qui a un signe est amenée en correspondance avec la zone d'action de la fraise (7), et pour chaque signe présent dans la tige (54) de la clé (50) une opération d'usinage correspondante est effectuée par des moyens de la fraise (7) pour obtenir en correspondance avec ledit signe une encoche (51) de profondeur correspondant à celle de la partie (33) du deuxième module de gabarit (30) qui est en face/alignée avec le palpeur (8) et qui interagit avec ce dernier.

14. Procédé selon une ou plusieurs des revendications précédentes, **caractérisé en ce que** lesdits passages sont répétés cycliquement plusieurs fois jusqu'à obtention d'une clé (50) qui, une fois insérée et tournée à l'intérieur de la serrure (40), est apte à ouvrir/déverrouiller et en cela:
- à chaque cycle, le deuxième module de gabarit (30) est positionné à l'intérieur de son siège opératoire (34) prévu dans la machine (2) de telle sorte que, en correspondance avec la zone d'action du palpeur (8) de ladite machine, il y ait une portion (33) de profondeur différente de celle qui faisait face au cycle précédent, et
- à chaque cycle, à la surface de la couche externe de matériel malléable de la clé (50), les nouveaux signes, qui n'étaient pas présents dans les cycles précédents, sont identifiés et laissés sur ladite surface à la suite de la dernière tentative de ouvrir la serrure (40).

15. Procédé selon une ou plusieurs des revendications précédentes, **caractérisé en ce que** lesdits passages sont répétés cycliquement plusieurs fois jusqu'à l'obtention d'une clé (50) qui, une fois introduite et tournée à l'intérieur de la serrure (40), est apte à ouvrir/déverrouiller ledit verrou (40) et **en ce que**:
- au moins un autre premier module de gabarit (20) est identifié qui présente des parties non rainurées (26) d'une largeur différente par rapport à celle du premier module de gabarit (20) déjà utilisé, et
- la clé (50) est positionnée dans ledit autre premier module de gabarit (20) et en séquence, elle la déplace à l'intérieur de son siège opérationnel (24) de sorte que chaque région de la tige (54) de la clé (50) présente un signe est porté en correspondance avec la zone d'action de la fraise (7).
